# EUROPÄISCHE PATENTSCHRIFT

(11) **EP 0 458 209 B1**
(45) Veröffentlichungstag und Bekanntmachung des Hinweises auf die Patenterteilung: **16.08.1995**
(21) Anmeldenummer: 91108031.5
(22) Anmeldetag: 17.05.1991
(51) Int. Cl.: F16H 61/06

(54) **Steuerventil für eine hydraulische Schaltkupplung**
Control valve for a hydraulic shifting clutch
Soupape de commande pour un embrayage

(30) Priorität: 23.05.1990 DE 4016647
(43) Veröffentlichungstag der Anmeldung: 27.11.1991
(73) Patentinhaber: FORD-WERKE AKTIENGESELLSCHAFT, 50725 Köln (DE); FORD MOTOR COMPANY LIMITED, Brentwood, Essex CM13 3BW (GB); FORD FRANCE S. A., 92506 Rueil-Malmaison (FR)
(72) Erfinder: Wolf, Dieter, W-5000 Köln 90 (DE); Roeseling, Elmar, W-5000 Köln 80 (DE)
(74) Vertreter: Gauger, Hans-Peter, Dipl.-Ing.

(56) Entgegenhaltungen:
- EP-A- 0 316 629
- FR-A- 2 435 637
- GB-A- 2 027 502
- US-A- 4 442 727

## Beschreibung

Die Erfindung bezieht sich auf ein Steuerventil für eine hydraulische Schaltkupplung der durch den Oberbegriff des Patentanspruches 1 angegebenen Gattung.

Bei einem aus der DE-C-34 17 784 bekannten Steuerventil dieser Art ist mit der die Strömungsdrossel aufweisenden ersten Anschlußleitung eine Bypassleitung zu dem Steuerventil ausgebildet, die an die Steuerdruckleitung einer in allen Vorwartsgängen des Wechselgetriebes betätigten Schaltkupplung angeschlossen ist. Die Steuerdruckleitung ist über eine Abzweigung der Bypassleitung zu der Ventilkammer des Steuerventils geführt. Der geregelte Leitungsdruck wird damit auch über die Lochblende der zweiten Anschlußleitung des Steuerventils an die Steuerdruckleitung der Schaltkupplung weitergeleitet, sobald der eine Steuerbund des Steuerschiebers in Abhängigkeit von der Druckhöhe des Leitungsdruckes stromabwärts von der Strömungsdrossel der ersten Anschlußleitung und der Druckhöhe des Drosseldruckes die zweite Anschlußleitung entgegen der Kraft der Regelfeder freigegeben hat. Das bekannte Steuerventil ist im übrigen in eine mit einem 1-2 Übergangsventil und mit einem 2-3 Dämpfventil gemeinsame Ventilbohrung eingesetzt, die ebenfalls mit dem Drosseldruck beaufschlagt werden und mit den einzelnen Gangwechsel-Schaltventilen der Steuervorrichtung zusammengeschaltet sind, deren Schaltdruckleitung von der Steuerdruckleitung der in allen Vorwärtsgängen betätigten Schaltkupplung abgezweigt ist. Die Abzweigung ist an einer Stelle stromabwärts von der Strömungsdrossel vorgenommen, so daß die Lochblende erst nach der Freigabe der zweiten Anschlußleitung durch den zugeordneten einen Steuerbund des Steuerschiebers hin zu den Gangwechsel-Schaltventilen durchgeschaltet wird.

Der Erfindung liegt die Aufgabe zugrunde, ein Steuerventil der angegebenen Gattung derart auszubilden, daß für die Betätigung der Schaltkupplung eine feinfühligere Abhängigkeit von dem Drosseldruck erhalten wird.

Diese Aufgabe wird durch die im Kennzeichenteil des Patentanspruches 1 angegebenen Merkmale gelöst.

Durch die bei dem erfindungsgemäßen Steuerventil vorgesehenen Anschlüsse sowohl der zu der Schaltkupplung führenden Steuerdruckleitung wie auch der mit der Strömungsdrossel versehenen ersten Anschlußleitung direkt an die Ventilkammer wird bei jeder mit dem Handwählventil der Steuervorrichtung eingeleiteten Schaltung des Wechselgetriebes für eine Vorwärtsfahrt des Fahrzeuges der geregelte Leitungsdruck über das Steuerventil weitergeleitet. Diese Weiterleitung wird primär unter Vermittlung der dem Steuerventil in der ersten Anschlußleitung vorgeschalteten Strömungsdrossel vorgenommen. Wird daher die Strömungsdrossel mit einem Lochdurchmesser von bspw. 1,5 mm ausgeführt, so wird für die Einbaulage des Steuerventils eine etwas verzögerte Weiterleitung des geregelten Leitungsdruckes der Steuervorrichtung an die angeschlossene Schaltkupplung erreicht, sobald mit dem Handwählventil aus der N-Schaltposition oder auch aus der R-Schaltposition in die D-Schaltposition übergewechselt wird, in welcher sämtliche Vorwärtsgänge des Wechselgetriebes selbsttätig geschaltet werden. Durch diese verzögerte Weitergabe des geregelten Leitungsdruckes wird daher die Schaltkupplung entsprechend weich angelegt.

Wenn andererseits ein Anfahren des Fahrzeuges unter einer erhöhten Drehmomentanforderung des Motors veranstaltet wird, so wird dabei der Steuerschieber gegen die Kraft der Regelfeder in eine Schaltposition gebracht wird, in welcher die mit der Lochblende versehene zweite Anschlußleitung nicht länger gegen die Ventilkammer des Steuervetils abgesperrt ist. Wenn nun die Lochblende bei dem vorerwähnten Durchmesser der Strömungsdrossel mit einem Strömungsquerschnitt von etwa 45 mm² bemessen wird, dann wird durch die als Folge des anwesenden Drosseldrucks zusätzliche Zuschaltung der Lochblende in den Füllvorgang der Schaltkupplung ein beschleunigtes Anlegen der Schaltkupplung erreicht. Eine damit auch erhaltene höhere Kapazität der Schaltkupplung ergibt deren verbesserte Schonung und ist daneben für den Winterbetrieb des Fahrzeuges sehr vorteilhaft.

Die zu der Strömungsdrossel zusätzliche Zuschaltung der Lochblende in den Füllvorgang der Schaltkupplung wird nämlich auch für ein Fahren mit kaltem Motor erhalten. Mit einer zusätzlichen Brennstoff-Einspritzung wird dann eine vergleichbare Erhöhung des Drosseldruckes auf einen Wert erhalten, der gegenüber der für die Einbaulage des Steuerventils für ein Anfahren mit warmen Motor berücksichtigten Druckhöhe ein beschleunigtes Verschieben des Steuerschiebers gegen die Kraft der Regelfeder zulässt.

Das erfindungsgemäße Steuerventil lässt sich schließlich auch unmittelbar bei der bekannten Steuervorrichtung verwenden und kann dort ohne größere Veränderungen bei den Anschlüssen in die Ventilbohrung des 1-2 Übergangsventils direkt eingebaut werden. Wenn dafür das Steuer-ventil mit den Merkmalen des Patentanspruches 3 ausgebildet wird, so wird der Vorteil erhalten, daß die Schaltpunkte der über die dritte Anschlußleitung angeschlossenen Gangwechsel-Schaltventile eine von dem Anlegevorgang der Schaltkupplung abgetrennte Beeinflussung erfahren. Andererseits wird so die Möglichkeit realisiert, mit einer entsprechenden Kalibrierung der Regelfeder eine Dämpfung der Schaltkupplung direkt beeinflussen zu können.

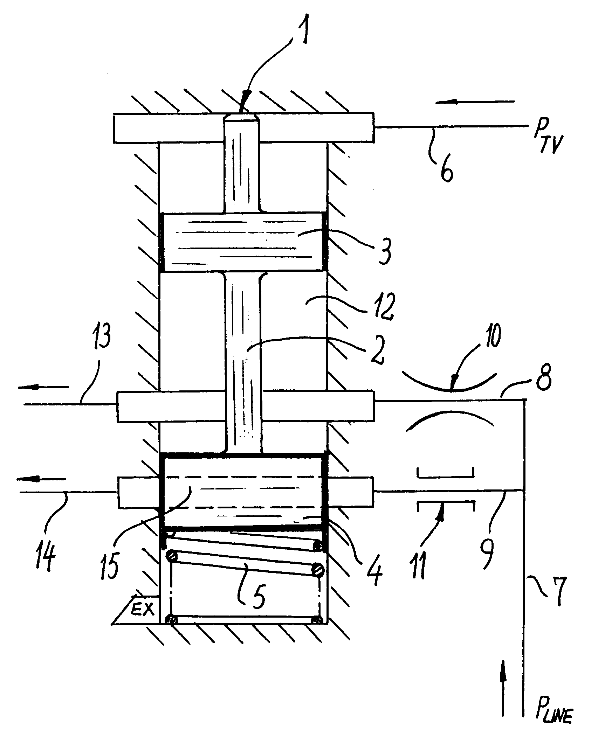

Das in der Zeichnung schematisch gezeigte Steuerventil 1 ist zur Verwendung bei einer hydraulischen Steuervorrichtung für ein selbsttätig schaltendes Wechselgetriebe für Kraftfahrzeuge in einer Ausführungsform gemäß der DE-C-34 17 784 konzipiert, wo es mit seinem Steuerschieber 2 in die mit dem 1-2 Übergangsventil 448 vorhandene Ventilbohrung eingesetzt und durch eine zusätzliche Wand des Ventilgehäuses mit einem getrennten Kreislauf versorgt werden kann.

Der Steuerschieber 2 des Steuerventils weist somit wie der Steuerschieber am unteren Ende der Ventilbohrung bei diesem bekannten 1-2 Übergangsventii zwei Steuerbünde 3 und 4 gleichen Durchmessers auf und ist an der Stirnseite des einen Steuerbundes 4 durch eine sich in der Ventilbohrung abstützende Regelfeder 5 beeinflusst, deren Kraft dem von dem Motordrehmoment abhängigen Drosseldruck P_{TV} entgegenwirkt. Der von einem Drosseldruckventil erzeugte Drosseldruck wird über eine Anschlußleitung 6 an die Stirnseite des anderen Steuerbundes 3 des Steuerschiebers 2 zugeleitet, so daß er ab einem bestimmten Wert den Steuerschieber gegen die Kraft der Regelfeder 5 aus der in der Zeichnung dargestellten Einbaulage heraus verschieben kann.

Das Steuerventil 1 ist an eine den geregelten Leitungsdruck P_{LINE} der Steuervorrichtung führende Druckleitung 7 angeschlossen, die wie bei der bekannten Steuervorrichtung die Verbindung mit einem Handwählventil herstellt. Die Druckleitung 7 verzweigt sich in zwei parallel geschaltete Anschlußleitungen 8 und 9, die über eine Strömungsdrossel 10 bzw. eine Lochblende 11 an die Ventilkammer 12 des Steuerventils angeschlossen sind. In der Einbaulage des Steuerventils hat nur die erste Anschlußleitung 8 mit der Strömungsdrossel 10 über die Ventilkammer 12 einen direkten Anschluß an eine Steuerdruckleitung 13, die zu einer hydraulischen Schaltkupplung führt entsprechend dem Anschluß an die in allen Vorwärtsgängen betätigte Schaltkupplung CL3 bei der aus der DE-C-34 17 784 bekannten Steuervorrichtung. In der Einbaulage des Steuerventils ist andererseits die zweite Anschlußleitung 9 mit der Lochblende 11 durch den Steuerbund 4 des Steuerschiebers 2 abgesperrt. Eine noch vorhandene dritte Anschlußleitung 14, die als eine zu der Steuerdruckleitung 13 separate Schaltdruckleitung zu den Gangwechsel-Schaltventilen der Steuervorrichtung führt, ist über einen Ringkanal 15 der Ventilbohrung an die zweite Anschlußleitung 9 stromabwärts von der Lochblende 11 angeschlossen.

Solange die zweite Anschlußleitung 9 durch den Steuerbund 4 des Steuerschiebers 2 gegen die Ventilkammer 12 abgesperrt ist, wird der geregelte Leitungsdruck P_{LINE} somit nur unter Vermittlung der Strömungsdrossel 10 an die über die Steuerdruckleitung 13 angeschlossene Schaltkupplung weitergeleitet. Sobald jedoch der Steuerschieber 2 durch eine stirnseitige Druckbeaufschlagung des Steuerbundes 3 mit einem von dem Drosseldruckventil der Steuervorrichtung über die Anschlußleitung 6 angelieferten Drosseldruck P_{TV} gegen die Kraft der Regelfeder 5 verschoben wird, wird dann der geregelte Leitungsdruck auch unter Vermittlung der Lochblende 11 der zweiten Anschlußleitung 9 in die Ventilkammer 12 und von dort in die Steuerdruckleitung 13 zugeführt. Die Füllung der Schaltkupplung wird damit beschleunigt. Im übrigen ist die Lochblende 11 über den Ringkanal 15 ständig mit der Anschlußleitung 14 verbunden, womit die Gangwechsel-Schaltventile mit einem von dem primären Steuerdruck für die Schaltkupplung unabhängigen Schaltdruck versogt werden.

## Patentansprüche

1. Steuerventil (1) für eine hydraulische Schaltkupplung in einer hydraulischen Steuervorrichtung für ein selbsttätig schaltendes Wechselgetriebe für Kraftfahrzeuge, bei dem an einem zwei Steuerbünde (3,4) aufweisenden Steuerschieber (2) ein von dem Motordrehmoment abhängiger Drosseldruck der Kraft einer Regelfeder (5) entgegenwirkt und an die zwischen den zwei Steuerbünden (3,4) ausgebildete Ventilkammer (12) eine den geregelten Leitungsdruck der Steuervorrichtung führende Druckleitung (7) über eine Strömungsdrossel (10) in einer ersten Anschlußleitung (8) und eine Lochblende (11) in einer zweiten Anschlußleitung (9) angeschlossen sind, wobei die Ventilkammer (12) in der Einbaulage des Steuerventils (1) gegen die erste Anschlußleitung (8) und gegen eine zu der Schaltkupplung führende Steuerdruckleitung (13) geöffnet und gegen die zweite Anschlußleitung (9) durch einen Steuerbund (4) des Steuerschiebers (2) abgesperrt ist,
dadurch **gekennzeichnet,** daß die mit der Strömungsdrossel (10) Versehene erste Anschlußleitung (8) einen von der Steuerdruckleitung (13) getrennten und zu der mit der Lochblende (11) versehenen zweiten Anschlußleitung (9) parallel geschalteten separaten Anschluß ebenfalls direkt an die Ventilkammer (12) des Steuerventils aufweist.

2. Steuerventil nach Anspruch 1,
dadurch **gekennzeichnet,** daß die Strömungsdrossel (10) bei einem Strömungsquerschnitt der Lochblende (11) von etwa 45 mm² einen Durchmesser zwischen etwa 0,5 mm und 3,0 mm für eine angepasste Volumenstromregelung bei der Füllung der Schaltkupplung aufweist.

3. Steuerventil nach Anspruch 1 oder 2,
dadurch **gekennzeichnet,** daß an die Ventilkammer (12) eine zu den Gangwechsel-Schaltventilen der Steuervorrichtung führende dritte Anschlußleitung (14) angeschlossen ist, die über einen Ringkanal (15) der Ventilbohrung an die zweite Anschlußleitung (9) stromabwärts von der Lochblende (11) angeschlossen ist.

## Claims

1. A control valve (1) for a hydraulic control clutch in a hydraulic control device for an automatic transmission for motor vehicles, comprising a control plunger (2) having two lands (3, 4) on which a throttle pressure being dependent on the machine torque operates against the force of a control spring (5) and to the valve chamber (12) as formed between the two lands (3, 4) of which a pressure line (7) carrying the controlled line pressure of the control device is connected via a flow orifice (10) in a first connecting line (8) and a control aperture (11) in a second connecting line whereby the valve chamber (12) in the mounting position of the control valve (1) is open toward the first connecting line (8) and towards a control pressure line (13) leading to the control clutch and closed towards the second connecting line (9) by means of a land (5) of the control plunger (2),
characterized in that the first connecting line (8) being provided with the flow orifice (10) has as well a separate connection directly to the valve chamber (12) of the control valve which is separate from the control pressure line (13) and in parallel to the second connecting line (9) which is provided with the control aperture (11).

2. A control valve according to claim 1,
characterized in that the flow orifice (10) when the flow cross-section of the control aperture (11) is about 45 mm²has a diameter between about 0.5 mm and 3.0 mm for an adapted control of the volumetric flow at the time of the filling of the control clutch.

3. A control valve according to claim 1 or 2,
characterized in that a third connecting line (14) leading to the gear shifting control valves of the control device is connected to the valve chamber (12) which is connected via an annular channel (15) of the valve bore to the second connecting line (9) downstream of the control aperture (11).

## Revendications

1. Soupape de réglage (1) pour un embrayage hydraulique dans un dispositif de commande hydraulique pour une transmission automatique pour véhicules à moteur, dans le cas de laquelle une pression d'étranglement dépendant du couple moteur réagit contre la force d'un ressort de réglage (5) au niveau d'un tiroir de distribution (2) présentant deux épaulements de distribution (3, 4), et un tuyau sous pression (7) guidant la pression réglée du dispositif de commande étant relié à la boîte de distribution (12) réalisée entre les deux épaulements de distribution (3, 4) par le biais d'un étranglement (10) dans un premier tuyau de raccordement (8) et d'un diaphragme (11) dans un deuxième tuyau de raccordement (9), sachant que, lorsque la soupape de réglage (1) est en position de montage, la boîte de distribution (12) est ouverte vers le premier tuyau de raccordement (8) et vers un tuyau sous pression (13) menant à l'embrayage et est fermée vers le deuxième tuyau de raccordement (9) par un épaulement de distribution (4) du tiroir de distribution (2), caractérisée en ce que le premier tuyau de raccordement (8) muni de l'étranglement (10) présente un raccordement séparé menant également directement à la boîte de distribution (12) de la soupape de réglage, qui est distinct de la conduite de commande sous pression (13) et qui est monté en parallèle par rapport au deuxième tuyau de raccordement (9) muni du diaphragme (11).

2. Soupape de réglage selon la revendication 1, caractérisée en ce que l'étranglement (10) présente, pour une section de passage du diaphragme (11) d'environ 45 mm², un diamètre compris environ entre 0,5 mm et 3,0 mm pour régler de façon appropriée le débit lors du remplissage de l'embrayage.

3. Soupape de réglage selon la revendication 1 ou 2, caractérisée en ce qu'un troisième tuyau de raccordement (14) menant aux tiroirs de changement de vitesse du dispositif de commande, qui est raccordé par un canal annulaire (15) du perçage de soupape au deuxième tuyau de raccordement (9) en aval du diaphragme (11), est raccordé à la boîte de distribution (12).
